# EUROPEAN PATENT SPECIFICATION

(11) **EP 2 647 677 B1**
(45) Date of publication and mention of the grant of the patent: **16.05.2018**
(21) Application number: 11846042.7
(22) Date of filing: 14.11.2011
(51) Int. Cl.: C09D 129/14, C09D 5/00, C09D 183/02, C03C 17/00, C08K 3/36, C08K 13/02

(54) **ANTI-FOG COATED ARTICLE**
ARTIKEL MIT ANTIBESCHLAGBESCHICHTUNG
ARTICLE REVÊTU ANTI-BUÉE

(30) Priority: 03.12.2010 JP 2010270922
(43) Date of publication of application: 09.10.2013
(73) Proprietor: Nippon Sheet Glass Co., Ltd., Minato-ku Tokyo 108-6321 (JP)
(72) Inventor: OYA, Kazuaki, Tokyo 108-6321 (JP); KAMITANI, Kazutaka, Tokyo 108-6321 (JP); TERANISHI, Toyoyuki, Tokyo 108-6321 (JP); MURATA, Shuhei, Tokyo 108-6321 (JP)
(74) Representative: Hart-Davis, Jason
(86) International application number: PCT/JP2011/076217
(87) International publication number: WO 2012/073685

(56) References cited:
- EP-A1- 0 001 502
- JP-A- 2 175 784
- JP-A- 10 212 471
- JP-A- 51 041 716
- JP-A- 56 159 231
- JP-A- 56 159 231
- JP-A- 62 153 147
- JP-A- 2001 152 137
- JP-A- 2001 233 638
- JP-A- 2005 314 495
- MATSUYAMA I ET AL: "Raman and GC-MS study of the initial stage of the hydrolysis of tetramethoxysilane in acid and base catalyzed sol-gel processes", JOURNAL OF NON-CRYSTALLINE SOLIDS, NORTH-HOLLAND PHYSICS PUBLISHING. AMSTERDAM, NL, vol. 135, no. 1, 2 October 1991 (1991-10-02), pages 22-28, XP024060019, ISSN: 0022-3093, DOI: 10.1016/0022-3093(91)90438-C [retrieved on 1991-10-02]
- Nippon Kasei Chemical: "Synthetic Silica Powder MKC Silica", , 27 May 2009 (2009-05-27), page 1, XP55282854, Retrieved from the Internet: URL:http://www.nkchemical.co.jp/ver_03/eng lish/product_e/nkc_mkc_e.pdf [retrieved on 2016-06-22]

## Description

### Technical Field

The present invention relates to an antifog-film-coated article. More particularly, the present invention relates to an antifog-film-coated article including a hard substrate; in particular, a transparent hard substrate, and a water-absorbing composite film provided on the hard substrate, the composite film having excellent antifog property and high pencil hardness.

### Background Art

Antifog-film-coated articles each including a hard substrate and an antifog film provided on the substrate are used in various applications, including antifog mirrors for bathrooms, washrooms, etc., antifog windowpanes and antifog mirrors for automobiles, etc., and antifog windowpanes for buildings.

Regarding an antifog single-layer film formed of a water-absorbing polymer compound, Patent Document 1 discloses an application-type antifog agent containing, as an active component, only a polyvinyl acetal resin, which, when applied to an object and then dried at ambient temperature, forms an antifog film on the object. Patent Document 2 discloses an antifog article including an object such as a glass, mirror, or plastic film, and an antifog layer which is formed of a polyvinyl acetal resin having a degree of acetalization of 2 to 40 mol% and which is provided on the surface of the object; or an antifog article including such an object, a water-soluble resin layer provided on the surface of the object, and an antifog layer which is formed of a polyvinyl acetal resin having a degree of acetalization of 2 to 40 mol% and which is provided on the water-soluble resin layer.

However, an antifog film formed through the technique described in Patent Document 1 or 2 exhibits, even in a dried state, poor scratch resistance, abrasion resistance, and resistance to wiping with a wet cloth. In addition, the antifog film exhibits further impaired performance during moisture absorption, and may fail to be used in, for example, such a situation that the surface of the film is wiped routinely. These problems occur for the following reasons.

Since the antifog film is a single-layer film formed of a water-absorbing polymer compound, the water-absorbing polymer resin is exposed on the surface of the film, and thus the film exhibits good antifog property. However, the water-absorbing polymer resin itself exhibits poor scratch resistance and abrasion resistance. When a curing agent or the like is incorporated into the film, the film exhibits increased strength, but poor water absorbability, resulting in failure to exhibit sufficient antifog performance.

Meanwhile, regarding a water-absorbing composite film containing a polyvinyl acetal resin and an inorganic component, for example, Patent Document 3 or 4 discloses an antifog substrate including a water-absorbing composite film containing a polyvinyl acetal resin having a degree of acetalization of 10 mol% or less and a hydrolysis product or partial hydrolysis product of an alkylsilyl isocyanate, the water-absorbing composite film having thereon a water-repellent layer or a protective film which exhibits water permeability and has a thickness of 3 to 10 nm.

However, a water-absorbing single-layer composite film formed through the technique described in Patent Document 3 or 4 may fail to exhibit high film hardness and abrasion resistance while maintaining sufficient antifog property, and thus a protective layer must be provided on the water-absorbing composite film. When the thickness of the protective layer is increased for improving the hardness and abrasion resistance of the entire film, the film exhibits impaired water permeability, and thus may lose its antifog property. Thus, the film may fail to exhibit sufficient antifog property while maintaining high film hardness and abrasion resistance. These problems occur for the following reasons.

When the amount of an alkylsilyl isocyanate incorporated into the composite film is increased, since the amount of an inorganic component (SiO₂) contained in the film structure is increased, the film exhibits improved scratch resistance and abrasion resistance, but impaired swelling property and flexibility; i.e., poor water absorbability. Thus, since the film may fail to maintain sufficient antifog property, the film must contain only a small amount of an alkylsilyl isocyanate. Therefore, the water-absorbing single-layer composite film may fail to exhibit sufficient film hardness. Meanwhile, when the thickness and hardness of the protective layer are increased for improving film hardness and abrasion resistance, the resultant film exhibits impaired water permeability. That is, high film hardness and abrasion resistance may fail to be imparted to the protective layer.

Patent Document 5 discloses an antifog coating material that comprises an aqueous solution of a water-soluble polymer and a colloidal silica sol with a particle size of 1 to 100 nm that is obtained from the complete hydrolysis of a silicon alkoxide. The water-soluble polymer may be a polyvinyl acetal resin.

### Prior Art Document

### Patent Document

Patent Document 1: Japanese Patent Application Laid-Open (*kokai*) No. H06-157794
Patent Document 2: Japanese Patent Application Laid-Open (*kokai*) No. H06-158031
Patent Document 3: Japanese Patent Application Laid-Open (*kokai*) No. 2001-146585
Patent Document 4: Japanese Patent Application Laid-Open (*kokai*) No. 2001-152137
Patent Document 5: Japanese Patent Application Laid-Open (*kokai*) No. 2005-314495

### Summary of the Invention

### Problems to be Solved by the Invention

In view of the foregoing, an object of the present invention is to provide an antifog-film-coated article including an antifog film having high hardness while maintaining sufficient antifog performance, which article can be employed in various applications, including antifog mirrors, windowpanes for automobiles, and windowpanes for buildings.

### Means for Solving the Problems

In order to achieve the aforementioned object, the present inventors have conducted extensive studies, and as a result have obtained the following findings.

The present inventors have found that the aforementioned object can be achieved by forming, on a hard substrate, a water-absorbing composite film containing, in specific proportions, a polyvinyl acetal resin, a hydrolysis product or partial hydrolysis product of a silicon alkoxide compound, and colloidal silica having an average particle diameter of 5 to 50 nm, wherein a surfactant is dispersed in the water-absorbing composite film. When SiO₂ fine particles (colloidal silica) having an average particle diameter of 5 to 50 nm, serving as an inorganic component, are incorporated in addition to the hydrolysis product or partial hydrolysis product of the silicon alkoxide, the amount of the inorganic component contained in the composite film can be increased while the strength and flexibility of the film structure are maintained at certain levels. Since fine pores are formed in the composite film through incorporation of colloidal silica, water is readily incorporated into the film. Therefore, the composite film exhibits improved hardness while maintaining sufficient antifog property.

Also, the amount of the inorganic component contained in the composite film can be increased through incorporation of colloidal silica. Therefore, without formation of a protective layer on the antifog film, the film exhibits sufficient antifog performance and exhibits such a high hardness that no scratches are formed on the film surface even under application of a load corresponding to a pencil hardness of 4H or more.

In the case where the amount of the inorganic component is increased with respect to the polyvinyl acetal resin, when baking is carried out at a high temperature for a long period of time; for example, at 120°C for 30 minutes, curing of the composite film proceeds, and thus the film may fail to exhibit sufficient antifog performance, although having certain levels of film hardness and abrasion resistance. However, when the baking temperature and time are appropriately regulated; for example, baking is carried out at 120°C for 10 minutes, or at 60°C for 30 minutes to 60 minutes, the composite film can be cured while the strength and flexibility of the film structure are maintained at certain levels. In addition, the composite film exhibits, for example, improved hardness, abrasion resistance, and resistance to wiping with a wet cloth, while maintaining sufficient antifog property.

Furthermore, since the amounts of colloidal silica and the hydrolysis product or partial hydrolysis product of the silicon alkoxide can be increased in the antifog film, the film exhibits sufficient antifog performance and exhibits such a high hardness that no scratches are formed on the film surface even under application of a load corresponding to a pencil hardness of 4H or more.

In the case of the water-absorbing composite film containing the polyvinyl acetal resin, colloidal silica, and the hydrolysis product or partial hydrolysis product of the silicon alkoxide, since fogging occurs at the surface of the composite film after absorption of a saturating amount of water in the film, when the film is provided with such an antifog performance that it can pass antifog testing only by virtue of its water absorbability, the hardness and abrasion resistance of the film may fail to be improved. However, when a surfactant is dispersed in the water-absorbing composite film, hydrophilicity can be imparted to the composite film, and thus a water film is formed on the surface of the composite film after absorption of a saturating amount of water in the composite film, resulting in no occurrence of fogging.

Therefore, after formation of the water-absorbing composite film containing the polyvinyl acetal resin, colloidal silica, and the hydrolysis product or partial hydrolysis product of the silicon alkoxide, a surfactant is applied to the surface of the composite film, so that the surfactant is dispersed in the composite film, and that the composite film exhibits both water absorbability and hydrophilicity.

When hydrophilicity is imparted to the water-absorbing composite film, the film exhibits sufficient antifog performance and exhibits such a high hardness that no scratches are formed on the film surface even under application of a load corresponding to a pencil hardness of 6H or more. Thus, advantageously, after formation of the water-absorbing composite film containing the polyvinyl acetal resin, colloidal silica, and the hydrolysis product or partial hydrolysis product of the silicon alkoxide, the composite film is subjected to surface treatment with an aqueous solvent, for the following reasons. When the water-absorbing composite film is subjected to the aforementioned surface treatment after formation of the composite film, the composite film exhibits improved water absorbability while maintaining its hardness, abrasion resistance, and resistance to wiping with a wet cloth. In addition, when a surfactant is dispersed in the water-absorbing composite film, hydrophilicity can be imparted to the composite film, and thus a water film is formed on the surface of the composite film after absorption of a saturated amount of water in the composite film, resulting in no occurrence of fogging.

Thus, when hydrophilicity is imparted to the water-absorbing composite film, the composite film exhibits such a water-absorbing performance that it can pass freeze testing, as well as such an antifog performance that it can pass antifog testing. In addition, when the post-baking time is appropriately regulated, the resultant antifog film exhibits such a high hardness that no scratches are formed on the film surface even under application of a load corresponding to a pencil hardness of 9H or more.

The present invention has been accomplished on the basis of these findings.

Accordingly, the present invention provides:
(1) an antifog-film-coated article comprising a hard substrate, and a water-absorbing composite film formed on the substrate, characterized in that the water-absorbing composite film contains a polyvinyl acetal resin; colloidal silica in an amount of 30 to 80 parts by mass on the basis of 100 parts by mass of the resin; and silica-equivalent particles derived from a hydrolysis product or partial hydrolysis product of a silicon alkoxide compound in a silica-equivalent amount of 5 to 55 parts by mass on the basis of 100 parts by mass of the resin, wherein a surfactant is dispersed in the water-absorbing composite film and wherein the colloidal silica is SiO₂ fine particles having an average particle size of 5 to 50 nm.
(2) an antifog-film-coated article according to (1) above, wherein the hard substrate is a mirror or a transparent hard substrate;
(3) an antifog-film-coated article according to (2) above, wherein the transparent hard substrate is a glass substrate;
(4) an antifog-film-coated article according to any of (1) to (3) above, wherein the water-absorbing composite film is formed by applying a coating liquid for forming the water-absorbing composite film to the hard substrate and by subjecting the coated substrate to thermal treatment, in which the coating liquid contains an aqueous solvent, the polyvinyl acetal resin, and the hydrolysis product or partial hydrolysis product of the silicon alkoxide compound, and applying an aqueous surfactant solution to the surface of the water-absorbing composite film and subjecting the solution-coated film to thermal treatment;
(5) an antifog-film-coated article according to any of (1) to (4) above, wherein the silicon alkoxide compound is a tetraalkoxysilane;
(6) an antifog-film-coated article according to (4) or (5) above, wherein the water-absorbing composite film has a thickness of 2 to 10 µm.

### Effects of the Invention

According to the present invention, there can be provided an antifog article including an antifog film having a water-absorbing function, a hydrophilic function, a sufficient antifog performance, and a high hardness (a pencil hardness of 4H or more), which article can be employed in various applications, including mirrors, windowpanes for automobiles, and windowpanes for buildings.

### Modes for Carrying Out the Invention

The antifog-film-coated article of the present invention will next be described.

The antifog-film-coated article of the present invention includes a hard substrate, and a water-absorbing composite film formed on the substrate. A characteristic feature of the antifog-film-coated article resides in that the water-absorbing composite film contains a polyvinyl acetal resin; colloidal silica in an amount of 30 to 80 parts by mass on the basis of 100 parts by mass of the resin; and silica-equivalent particles derived from a hydrolysis product or partial hydrolysis product of a silicon alkoxide compound in an amount of 5 to 55 parts by mass on the basis of 100 parts by mass of the resin.

### [Hard substrate]

In the antifog-film-coated article of the present invention, the hard substrate, which serves as a base, may be any mirror or transparent hard substrate. No particular limitation is imposed on the transparent hard substrate, and the transparent hard substrate employed may be selected, as appropriate, from among plastic substrates; for example, a polycarbonate substrate and an acrylic resin substrate such as a polymethyl methacrylate substrate, glass substrates, etc. Of these, a glass substrate is preferably employed for forming a water-absorbing composite film having high pencil hardness.

### (Glass substrate)

The glass substrate employed may be, for example, plate glass which is generally employed for automobiles, buildings, industrial applications, etc.; i.e., float plate glass, clear glass and any colored glass such as green glass, or bronze glass, any functional glass, tempered glass or the like, laminated glass and multi-layer glass or any plate glass product such as a flat glass plate or a curved glass plate.

The thickness of the glass substrate is, for example, 1 mm to 12 mm. Particularly, when the antifog-film-coated article is employed for buildings, the thickness of the glass substrate is preferably 3 mm to 10 mm, whereas when the antifog-film-coated article is employed for automobiles, the thickness of the glass substrate is preferably 2 mm to 5 mm.

### (Plastic substrate)

When a plastic substrate as described above, such as a polycarbonate substrate or an acrylic resin substrate, is employed, the thickness of the substrate is generally 2 to 8 mm, preferably 3 to 6 mm.

When such a plastic substrate is employed, the surface of the substrate on which a water-absorbing composite film is to be formed may optionally be subjected to a surface treatment process such as oxidation treatment or roughening treatment, for the purpose of improving adhesion between the plastic substrate and the water-absorbing composite film. Examples of the oxidation treatment include corona discharge treatment, plasma treatment, chromic acid treatment (wet type), flame treatment, hot air treatment, and ozone/UV ray irradiation treatment. Examples of the roughening treatment include sand blasting and treatment with a solvent. Such a surface treatment process is appropriately selected in consideration of the type of the plastic substrate employed. Generally, corona discharge treatment is preferably employed from the viewpoints of, for example, effects and operability.

### [Water-absorbing composite film]

In the antifog-film-coated article of the present invention, the water-absorbing composite film formed on the surface of the aforementioned hard substrate contains a polyvinyl acetal resin, colloidal silica, and a hydrolysis product or partial hydrolysis product of a silicon alkoxide compound.

### (Polyvinyl acetal resin)

The polyvinyl acetal resin employed in the present invention may be produced through condensation reaction between polyvinyl alcohol and an aldehyde; i.e., acetalization of polyvinyl alcohol. In this case, the degree of acetalization is generally 2 to 40 mol%, preferably 3 to 30 mol%, more preferably 5 to 20 mol%. The degree of acetalization may be determined through, for example, ¹³C nuclear magnetic resonance spectroscopy.

When the degree of acetalization falls within a range of 2 to 40 mol%, the resultant water-absorbing composite film exhibits favorable water absorbability and water resistance, and sufficient antifog property. Acetalization of polyvinyl alcohol may be carried out through a known technique such as the precipitation method employing an aqueous medium in the presence of an acid catalyst, or the dissolution method employing a solvent such as an alcohol. The polyvinyl acetal resin may be produced, from a polyvinyl acetate resin serving as a raw material, by carrying out saponification and acetalization in parallel.

The polyvinyl alcohol employed generally has an average polymerization degree of 200 to 4,500, preferably 500 to 4,500. When the average polymerization degree is 200 or more, synthesis of polyvinyl alcohol can be attained, whereas when the average polymerization degree is 4,500 or less, the solution viscosity does not become excessively high, and the resultant antifog-film-coated article is suitable for practical applications. The higher the average polymerization degree, the more favorable the water resistance and water absorbability of the water-absorbing composite film.

The polyvinyl alcohol employed generally has a saponification degree of 75 to 99.8 mol%. When the saponification degree is 75 mol% or more, sufficient solubility is achieved during reaction, whereas when the saponification degree is 99.8 mol% or less, synthesis of polyvinyl alcohol can be attained. The lower the saponification degree, the more favorable the water absorbability of the water-absorbing composite film.

Examples of the aldehyde which is subjected to condensation reaction with polyvinyl alcohol include aliphatic aldehydes such as formaldehyde, acetaldehyde, butyraldehyde, hexylcarbaldehyde, octylcarbaldehyde, and decylcarbaldehyde; aromatic aldehydes, for example, benzaldehyde, alkyl-substituted benzaldehydes such as 2-methylbenzaldehyde, 3-methylbenzaldehyde, and 4-methylbenzaldehyde, and halogen-substituted benzaldehydes such as chlorobenzaldehyde, aromatic aldehydes having, on the aromatic ring, a substituent such as a hydroxy group, an alkoxy group, an amino group, or a cyano group; and aldehydes having a condensed aromatic ring, such as naphthaldehyde and anthraldehyde.

Particularly, an aromatic aldehyde is preferably employed, since the resultant resin exhibits favorable water absorbability, water resistance, and transparency. Since an aromatic aldehyde exhibits high hydrophobicity, excellent water resistance is achieved even in the case of low degree of acetalization, and also a large amount of hydroxyl groups remain, resulting in excellent water absorbability.

The amount of the polyvinyl acetal resin contained in the water-absorbing composite film is generally about 40 to about 70 mass%, preferably 40 to 60 mass%, more preferably 40 to 50 mass%, for improvement of film hardness, water absorbability, and antifog property.

### (Colloidal silica)

Colloidal silica contained in the water-absorbing composite film is formed of SiO₂ fine particles having an average particle diameter of 5 to 50 nm. Since the water-absorbing composite film contains colloidal silica, the composite film has certain levels of strength and flexibility, and the amount of the inorganic component contained in the film can be increased. Also, since the water-absorbing composite film contains colloidal silica, fine pores are formed in the film, and thus water is readily incorporated into the film. Therefore, the hardness of the film can be improved while the antifog property thereof is maintained at a sufficient level.

When the average particle diameter of colloidal silica is excessively large, the haze of the resultant film may increase; i.e., the film may become turbid, whereas when the average particle diameter of colloidal silica is excessively small, aggregation is likely to occur, and uniform dispersion may fail to be achieved. Therefore, the average particle diameter of colloidal silica is preferably 5 to 50 nm, more preferably 8 to 20 nm.

The average particle diameter of colloidal silica may be determined through, for example, the laser diffraction light scattering method or the Coulter counter method.

The colloidal silica content of the water-absorbing composite film is 30 to 80 parts by mass on the basis of 100 parts by mass of the aforementioned polyvinyl acetal resin. When the colloidal silica content is 30 parts by mass or more, the resultant composite film exhibits a pencil hardness of 4H or more, whereas when the colloidal silica content is 80 parts by mass or less, the resultant water-absorbing composite film exhibits improved hardness, and the water absorbability and antifog performance of the film are not impaired during the prebaking treatment described hereinbelow.

For improvement of pencil hardness, the colloidal silica content of the water-absorbing composite film is preferably 50 to 80 parts by mass on the basis of 100 parts by mass of the polyvinyl acetal resin.

### (Silicon alkoxide compound)

The water-absorbing composite film contains, as an essential component, a hydrolysis product or partial hydrolysis product of a silicon alkoxide compound.

The silicon alkoxide compound employed is preferably a tetraalkoxysilane which can be readily hydrolyzed in an inorganic acid such as hydrochloric acid, sulfuric acid, or nitric acid, or in an organic acid such as p-toluenesulfonic acid, methanesulfonic acid, trichloroacetic acid, or trifluoroacetic acid, to thereby form silica. The four alkoxy groups of such a tetraalkoxysilane may be identical to or different from one another. However, in consideration of easy availability, a tetraalkoxysilane in which all the four alkoxy groups are the same is generally employed. From the viewpoint of hydrolysis, the alkoxy group is preferably a lower alkoxy group having 1 to 4 carbon atoms.

Examples of the tetraalkoxysilane include tetramethoxysilane, tetraethoxysilane, tetra-n-propoxysilane, tetraisopropoxysilane, tetra-n-butoxysilane, tetraisobutoxysilane, tetra-sec-butoxysilane, and tetra-tert-butoxysilane. These tetraalkoxysilanes may be employed singly or in combination of two or more species.

In the present invention, the water-absorbing composite film is required to contain silica-equivalent particles derived from the hydrolysis product or partial hydrolysis product of the silicon alkoxide in an amount of 5 to 55 parts by mass on the basis of 100 parts by mass of the aforementioned polyvinyl acetal resin. The amount of silica-equivalent particles derived from the hydrolysis product or partial hydrolysis product of the silicon alkoxide is calculated from the amount of the silicon alkoxide employed, under the assumption that 1 mol of SiO₂ is formed from 1 mol of the silicon alkoxide. The amount of the silica-equivalent particles contained in the water-absorbing composite film is 5 parts by mass or more, the water-absorbing composite film exhibits favorable antifog performance and high pencil hardness. Meanwhile, when the amount of the silica-equivalent particles contained in the water-absorbing composite film is 55 parts by mass or less, silking does not occur on the surface of the composite film; i.e., the composite film has a smooth surface. From the aforementioned viewpoints, the amount of the silica-equivalent particles is preferably 20 to 55 parts by mass, more preferably 30 to 55 parts by mass, on the basis of 100 parts by mass of the polyvinyl acetal resin.

Next will be described a method for forming a water-absorbing composite film on a hard substrate.

### [Formation of water-absorbing composite film]

For formation of a water-absorbing composite film on the aforementioned hard substrate, firstly, a coating liquid for forming the water-absorbing composite film is prepared.

### (Coating liquid for forming water-absorbing composite film)

The coating liquid for forming a water-absorbing composite film (hereinafter may be referred to simply as "coating liquid") may be prepared through the below-described method.

Specifically, a polyvinyl acetal resin, colloidal silica, and a silicon alkoxide compound are added in respective specific proportions to a solvent so that the amounts of these components contained in the resultant water-absorbing composite film satisfy the aforementioned requirements. Also, an appropriate amount of an inorganic acid or an organic acid, serving as a catalyst for hydrolysis of the silicon alkoxide compound, is added to the resultant mixture. In addition, any additive is optionally added to the mixture, to thereby prepare a coating liquid for forming a composite film, the coating liquid having a solid content of 3 to 20 mass%.

### <Solvent>

The solvent employed in the coating liquid is preferably an aqueous solvent; i.e., a mixture of an organic solvent and water.

The organic solvent employed may be a polar solvent having miscibility with water, such as an alcohol solvent, a cellosolve solvent, a ketone solvent, or an ether solvent.

Examples of the alcohol solvent include methanol, ethanol, n-propanol, isopropanol, n-butanol, and sec-butanol. Examples of the cellosolve solvent include methyl cellosolve, ethyl cellosolve, butyl cellosolve, and derivatives thereof. Examples of the ketone solvent include acetone, methyl ethyl ketone, and methyl isobutyl ketone. Examples of the ether solvent include dioxane and tetrahydrofuran.

These organic solvents may be employed singly or in combination of two or more species.

The amount of water is preferably 140 to 720 parts by mass, more preferably 300 to 500 parts by mass, on the basis of 100 parts by mass of the polyvinyl acetal resin.

### <Hydrolysis catalyst>

A catalyst for hydrolysis of a silicon alkoxide compound is added to the coating liquid so that the coating liquid contains a hydrolysis product or partial hydrolysis product of the silicon alkoxide compound.

The hydrolysis catalyst employed is preferably an acid catalyst; in particular, an inorganic acid such as hydrochloric acid, nitric acid, or sulfuric acid, or an organic acid such as trichloroacetic acid, trifluoroacetic acid, methanesulfonic acid, or p-toluenesulfonic acid.

The amount of such an acid catalyst is preferably 0.001 to 2 mol/kg, which corresponds to the amount by mole of proton under the assumption of complete dissociation of the acid.

The amount by mole of water employed for this hydrolysis is preferably four times or more the entire amount by mole of the silicon alkoxide compound.

### <Optional additive component>

The coating liquid may optionally contain any known additive, so long as the object of the present invention is not impaired. Examples of such an additive include various surfactants for improving water-absorbing performance, such as glycerin, ethylene glycol, polyethylene glycol, etc.; a leveling agent; a UV absorbent; a colorant; an antifoaming agent; a preservative; and fillers such as silica, talc, clay, and alumina.

### (Application of coating liquid)

The above-prepared coating liquid for forming a water-absorbing composite film is preferably stirred at room temperature for a specific period of time, to thereby hydrolyze the silicon alkoxide compound to some extent. Thereafter, the coating liquid is applied to the aforementioned hard substrate at room temperature.

No particular limitation is imposed on the application method. However, from the viewpoint of productivity, etc., application of the coating liquid may be appropriately carried out through, for example, flow coating, spin coating, dip coating, reverse coating, flexo printing, roll coating, curtain coating, nozzle coating, spray coating, or screen printing.

Thus, the coating liquid is applied to the hard substrate. Thereafter, drying is carried out generally at room temperature for about 5 to about 20 minutes, and then thermal treatment (prebaking) is carried out at a temperature of about 50 to about 130°C for about 5 to about 60 minutes. Subsequently, the thus-prebaked film is optionally subjected to the below-described post-treatment; i.e., treatment with an aqueous surfactant solution.

### <Treatment with aqueous surfactant solution>

In this treatment with an aqueous surfactant solution, an aqueous solution containing a surfactant in an amount of 0.5 to 15 mass% is applied to the surface of the above-prebaked film, and then the solution-coated film is subjected to thermal treatment (post-baking) at a temperature of 50 to 130°C for 5 to 60 minutes.

Through the treatment with the aqueous surfactant solution, the surfactant can be dispersed in the water-absorbing composite film, to thereby impart hydrophilicity to the composite film. Since a water film is formed on the surface of the composite film after absorption of a saturating amount of water in the composite film, fogging does not occur.

In the present invention, optionally, the surface of the prebaked film may be treated with an aqueous solvent; for example, a mixture of water and an organic solvent having miscibility with water, and then the thus-treated film may be subjected to treatment with an aqueous surfactant solution.

The thus-formed water-absorbing composite film generally has a thickness of 2 to 10 µm, preferably 2 to 6 µm.

The antifog film of the antifog-film-coated article of the present invention exhibits a water-absorbing function (i.e., a function of causing water droplets deposited on the surface of the film to be absorbed into the film, to thereby prevent occurrence of fogging) and a hydrophilic function (i.e., a function of forming a water film from water droplets deposited on the surface of the film, to thereby prevent occurrence of fogging). In the case where, for example, the antifog-film-coated article is applied to a windowpane of an automobile, the article exhibits antifog property (formation of no water film on the surface of the antifog film), by virtue of the aforementioned water-absorbing function, for about 10 seconds to about 3 minutes after the time when the temperature of the inner surface of the windowpane becomes equal to or lower than the dew point of an atmosphere inside the automobile. Thereafter, the antifog-film-coated article exhibits antifog property (formation of a water film on the surface of the antifog film), by virtue of the aforementioned hydrophilic function.

The antifog-film-coated article of the present invention includes a hard substrate; in particular, a transparent hard substrate, and a water-absorbing composite film provided on the hard substrate, the composite film having excellent antifog property and high pencil hardness. The antifog-film-coated article is suitable for use in various applications, including antifog mirrors for bathrooms and washrooms, antifog windowpanes and antifog mirrors for automobiles, and antifog windowpanes for buildings.

### Examples

The present invention will next be described in more detail by way of Examples, which should not be construed as limiting the invention thereto.

Properties of a glass substrate having a water-absorbing composite film produced in each Example were determined through the below-described methods.

### (1) Appearance

A water-absorbing composite film was visually observed and evaluated in terms of appearance, translucency, and cracking. Evaluation was carried out according to the following criteria:
A: there are no problems;
B: there are no practical problems, although some irregularities are formed on the surface of the film; and
C: there are problems.

### (2) Antifog property

Breath was applied to a glass substrate having a water-absorbing composite film at room temperature (25°C) for determining occurrence of fogging. The antifog property of the substrate was evaluated according to the following criteria:
AA: no occurrence of fogging;
A: occurrence of fogging through application of a large amount of breath;
B: occurrence of some fogging; and
C: the degree of fogging is equal to or higher than that in the case of a common glass substrate.

### (3) Pencil hardness

According to the testing methods for paints of JIS K 5400, the surface of a film was scratched five times with a pencil under application of a load of 1 kg (9.8 N). The pencil hardness of the film was determined on the basis of the hardness of a pencil which had broken the film less than twice.

### (4) Taber abrasion test

In the Taber abrasion test, a film was subjected to 500 cycles of abrasion under application of a load of 250 g by means of a Taber abrasion tester ("5150 ABRASER," product of TABER INDUSTRIES). The haze of the film was measured before and after the test by means of "HGM-2DP" manufactured by Suga Test Instruments Co., Ltd. When the difference between the haze of a film as measured before the test and that of the film as measured after the test was 4% or less, the film was regarded as passing the test.
A: Passed
C: Not passed

### (5) Rubbing test with wet cloth

In the rubbing test with a wet cloth hereinafter will be referred to as "wet cloth rubbing test" a film was subjected to 250 cycles of rubbing under application of a pressure of 0.1 kg/cm² by means of a rubbing tester ("HEIDON-18," product of Shinto Scientific Co., Ltd.) attached with a flannel cloth impregnated with 2 cm³ of water at 25°C. Thereafter, the surface of the film was visually observed for determining whether or not any change occurred.

### Example 1

To a glass container were added an alcohol solvent (trade name "Solmix AP-7," product of Japan Alcohol Trading Co., Ltd; solvent mixture of 85.5 mass% ethanol, 9.6 mass% n-propyl alcohol, and 4.9 mass% isopropyl alcohol) in an amount of 26.25 mass%; purified water in an amount of 14.86 mass%; S-LEC KX-5 (trade name, product of Sekisui Chemical Co., Ltd., polyvinyl acetal resin; 8 mass% (solid content)) in an amount of 43.75 mass%; SNOWTEX OS (trade name, product of Nissan Chemical Industries, Ltd., colloidal silica, amorphous silica solid content: 20 mass%) in an amount of 11.65 mass%; p-toluenesulfonic acid (TsOH) in an amount of 0.01 mass%; tetraethoxysilane (TEOS) in an amount of 3.47 mass%; and a leveling agent [trade name "KP-341," product of Shin-Etsu Chemical Co., Ltd.] in an amount of 0.01 mass%. The resultant mixture was stirred at room temperature (25°C) for three hours, to thereby prepare a coating liquid for forming a water-absorbing composite film. Table 1 shows the amounts of the respective components contained in the coating liquid.

Subsequently, a soda lime silicate glass substrate (thickness: 3.1 mm, size: 100 × 100 mm) was washed, and the above-prepared coating liquid was applied to the glass substrate through flow coating at a humidity of 30%RH and room temperature (20°C). Thereafter, drying was carried out at room temperature (20°C) for 10 minutes, and then thermal treatment (prebaking) was carried out at 120°C for 10 minutes, to thereby produce a glass substrate having a water-absorbing composite film. Hereinafter, the glass substrate may be referred to as a "water-absorbing-composite-film-formed glass substrate."

Table 2 shows the results of evaluation of properties of the thus-produced water-absorbing-composite-film-formed glass substrate.

### Example 2

The procedure of Example 1 was repeated, except that the amount of TEOS was changed to 5.65 mass%, and the amount of AP-7 was changed to 24.07 mass%, to thereby prepare a coating liquid for forming a water-absorbing composite film. Table 1 shows the amounts of the respective components contained in the coating liquid.

Subsequently, a water-absorbing-composite-film-formed glass substrate was produced in the same manner as in Example 1. Table 2 shows the results of evaluation of properties of the water-absorbing-composite-film-formed glass substrate.

### Example 3

A coating liquid for forming a water-absorbing composite film was prepared in the same manner as in Example 2. Table 1 shows the amounts of the respective components contained in the coating liquid.

Subsequently, in the same manner as in Example 2, a soda lime silicate glass substrate was washed, and the above-prepared coating liquid was applied to the glass substrate through flow coating at a humidity of 30%RH and room temperature (20°C). Thereafter, drying was carried out at room temperature (20°C) for 10 minutes, and then thermal treatment (prebaking) was carried out at 120°C for 10 minutes. Subsequently, a solution was prepared by diluting a surfactant [trade name "Rapisol A-30," product of NOF Corporation, sodium 1,4-bis(2-ethylhexyl)sulfosuccinate] with water so as to attain a surfactant concentration of 10 mass%, and the solution was applied to the surface of the above-formed film, followed by drying at room temperature, to thereby produce a water-absorbing-composite-film-formed glass substrate. Table 2 shows the results of evaluation of properties of the water-absorbing-composite-film-formed glass substrate.

### Example 4

A coating liquid for forming a water-absorbing composite film was prepared in the same manner as in Example 3. Table 1 shows the amounts of the respective components contained in the coating liquid.

Subsequently, in the same manner as in Example 3, a soda lime silicate glass substrate was washed, and the above-prepared coating liquid was applied to the glass substrate through flow coating at a humidity of 30%RH and room temperature (20°C). Thereafter, drying was carried out at room temperature (20°C) for 10 minutes, and then thermal treatment (prebaking) was carried out at 120°C for 10 minutes. Subsequently, a solution was prepared by diluting a surfactant [trade name "Rapisol A-30," product of NOF Corporation, sodium 1,4-bis(2-ethylhexyl)sulfosuccinate] with water so as to attain a surfactant concentration of 10 mass%, and the solution was applied to the surface of the above-formed film, followed by thermal treatment (post-baking) at 120°C for 10 minutes, to thereby produce a water-absorbing-composite-film-formed glass substrate. Table 2 shows the results of evaluation of properties of the water-absorbing-composite-film-formed glass substrate.

### Example 5

A coating liquid for forming a water-absorbing composite film was prepared in the same manner as in Example 4. Table 1 shows the amounts of the respective components contained in the coating liquid.

Subsequently, in the same manner as in Example 4, a soda lime silicate glass substrate was washed, and the above-prepared coating liquid was applied to the glass substrate through flow coating at a humidity of 30%RH and room temperature (20°C). Thereafter, drying was carried out at room temperature (20°C) for 10 minutes, and then thermal treatment (prebaking) was carried out at 120°C for 10 minutes. Subsequently, a solution was prepared by diluting the aforementioned surfactant with water so as to attain a surfactant concentration of 10 mass%, and the solution was applied to the surface of the above-formed film, followed by thermal treatment (post-baking) at 120°C for 30 minutes, to thereby produce a water-absorbing-composite-film-formed glass substrate. Table 2 shows the results of evaluation of properties of the water-absorbing-composite-film-formed glass substrate.

### Comparative Example 1

The procedure of Example 2 was repeated, except that colloidal silica was not employed; the amount of AP-7 was changed to 26.40 mass%; and the amount of purified water was changed to 24.18 mass%, to thereby prepare a coating liquid for forming a water-absorbing composite film. Table 1 shows the amounts of the respective components contained in the coating liquid.

Subsequently, a water-absorbing-composite-film-formed glass substrate was produced in the same manner as in Example 2. Table 2 shows the results of evaluation of properties of the water-absorbing-composite-film-formed glass substrate.

### Comparative Example 2

The procedure of Example 1 was repeated, except that colloidal silica was not employed; the amount of TEOS was changed to 6.94 mass%; the amount of AP-7 was changed to 25.11 mass%; and the amount of purified water was changed to 24.18 mass%, to thereby prepare a coating liquid for forming a water-absorbing composite film. Table 1 shows the amounts of the respective components contained in the coating liquid.

Subsequently, a water-absorbing-composite-film-formed glass substrate was produced in the same manner as in Example 1. Table 2 shows the results of evaluation of properties of the water-absorbing-composite-film-formed glass substrate.

### Comparative Example 3

The procedure of Example 2 was repeated, except that the amount of SNOWTEX OS was changed to 5.00 mass%; the amount of AP-7 was changed to 25.40 mass%; and the amount of purified water was changed to 20.18 mass%, to thereby prepare a coating liquid for forming a water-absorbing composite film. Table 1 shows the amounts of the respective components contained in the coating liquid.

Subsequently, a water-absorbing-composite-film-formed glass substrate was produced in the same manner as in Example 2. Table 2 shows the results of evaluation of properties of the water-absorbing-composite-film-formed glass substrate.

### Comparative Example 4

The procedure of Example 2 was repeated, except that the amount of SNOWTEX OS was changed to 15.00 mass%; the amount of AP-7 was changed to 23.40 mass%; and the amount of purified water was changed to 12.18 mass%, to thereby prepare a coating liquid for forming a water-absorbing composite film. Table 1 shows the amounts of the respective components contained in the coating liquid.

Subsequently, a water-absorbing-composite-film-formed glass substrate was produced in the same manner as in Example 2. Table 2 shows the results of evaluation of properties of the water-absorbing-composite-film-formed glass substrate.

### Comparative Example 5

The procedure of Example 2 was repeated, except that TEOS was not added, and the amount of AP-7 was changed to 29.72 mass%, to thereby prepare a coating liquid for forming a water-absorbing composite film. Table 1 shows the amounts of the respective components contained in the coating liquid.

Subsequently, a water-absorbing-composite-film-formed glass substrate was produced in the same manner as in Example 2. Table 2 shows the results of evaluation of properties of the water-absorbing-composite-film-formed glass substrate.

### Comparative Example 6

Without addition of colloidal silica and an acid, KX-1 (trade name, product of Sekisui Chemical Co., Ltd., polyvinyl acetal resin; 8 mass% (solid content)) and TEOS, serving as a silica sol raw material for matrix formation, were diluted with a solvent mixture of "Solmix AP-7" and purified water ("Solmix AP-7" : purified water = 5 : 5 by mass), to thereby prepare a coating liquid for forming a water-absorbing composite film, the coating liquid having a ratio by mass of the polyvinyl acetal resin to silica of 99.5 : 0.5 and a solid content of 3 mass%. Table 1 shows the amounts of the respective components contained in the coating liquid.

Subsequently, a water-absorbing-composite-film-formed glass substrate was produced in the same manner as in Example 1. Table 2 shows the results of evaluation of properties of the water-absorbing-composite-film-formed glass substrate.

### Comparative Example 7

The procedure of Comparative Example 6 was repeated, except that the ratio by mass of the polyvinyl acetal resin to silica was changed to 95.0 : 5.0, to thereby prepare a coating liquid for forming a water-absorbing composite film, and to produce a water-absorbing-composite-film-formed glass substrate.

Table 1 shows the amounts of the respective components contained in the coating liquid, and Table 2 shows the results of evaluation of properties of the water-absorbing-composite-film-formed glass substrate.

### [Table 1]

**Table 1**

| | Coating liquid for forming water-absorbing composite film (mass%) | | | | | | | Post-treatment | | |
|---|---|---|---|---|---|---|---|---|---|---|
| | Solmix AP-7 | Purified water | S-LEC KX-5 | SNOWTEX OS | TsOH | TEOS | KP-341 | Prebaking [120°C, 10 min] | Treatment with 10 mass% aqueous surfactant solution | Post-baking [120°C, 10 min] |
| Ex. 1 | 26.25 | 14.86 | 43.75 (3.5) | 11.65 (2.33) | 0.01 | 3.47 (1.00) | 0.01 | Done | Not done | Not done |
| Ex. 2 | 24.07 | 14.86 | 43.75 (3.5) | 11.65 (2.33) | 0.01 | 5.65 (1.63) | 0.01 | Done | Not done | Not done |
| Ex. 3 | 24.07 | 14.86 | 43.75 (3.5) | 11.65 (2.33) | 0.01 | 5.65 (1.63) | 0.01 | Done | Done | Not done |
| Ex. 4 | 24.07 | 14.86 | 43.75 (3.5) | 11.65 (2.33) | 0.01 | 5.65 (1.63) | 0.01 | Done | Done | Done |
| Ex. 5 | 24.07 | 14.86 | 43.75 (3.5) | 11.65 (2.33) | 0.01 | 5.65 (1.63) | 0.01 | Done | Done | Done (30 min) |
| Comp. Ex. 1 | 26.40 | 24.18 | 43.75 (3.5) | 0.00 | 0.01 | 5.65 (1.63) | 0.01 | Done | Not done | Not done |
| Comp. Ex. 2 | 25.11 | 24.18 | 43.75 (3.5) | 0.00 | 0.01 | 6.94 (2.00) | 0.01 | Done | Not done | Not done |
| Comp. Ex. 3 | 25.40 | 20.18 | 43.75 (3.5) | 5.00 (1.00) | 0.01 | 5.65 (1.63) | 0.01 | Done | Not done | Not done |
| Comp. Ex. 4 | 23.40 | 12.18 | 43.75 (3.5) | 15.00 (3.00) | 0.01 | 5.65 (1.63) | 0.01 | Done | Not done | Not done |
| Comp. Ex. 5 | 29.72 | 14.86 | 43.75 (3.5) | 11.65 (2.33) | 0.01 | 0 | 0.01 | Done | Not done | Not done |
| Comp. Ex. 6 | 31.32 | 31.31 | 37.31 (2.985) | 0.00 | 0.00 | 0.052 (0.015) | 0.01 | Done | Not done | Not done |
| Comp. Ex. 7 | 31.92 | 31.92 | 35.63 (2.850) | 0.00 | 0.00 | 0.052 (0.015) | 0.01 | Done | Not done | Not done |

### [Note]

- Each parenthesized value of S-LEC KX-5 or SNOWTEX OS corresponds to solid content, and each parenthesized value of TEOS corresponds to solid content as reduced to SiO₂.
- Solmix AP-7: alcohol solvent, product of Japan Alcohol Trading Co., Ltd
- S-LEC KX-5: polyvinyl acetal resin, product of Sekisui Chemical Co., Ltd., solid content: 8 mass%
- SNOWTEX OS: colloidal silica, product of Nissan Chemical Industries, Ltd., amorphous silica solid content: 20 mass%
- TsOH: p-toluenesulfonic acid
- TEOS: tetraethoxysilane
- KP-341: leveling agent, product of Shin-Etsu Chemical Co., Ltd
- Treatment with 10 mass% aqueous surfactant solution: application, to the surface of a film, of a solution prepared by diluting a surfactant [trade name "Rapisol A-30," product of NOF Corporation, sodium 1,4-bis(2-ethylhexyl)sulfosuccinate] with water so as to attain a surfactant concentration of 10 mass%.

### [Table 2]

**Table 2**

| | Appearance | Antifog property to breath | Pencil hardness | Taber abrasion test 250 g × 500 cycles | Wet cloth rubbing test 0.1 kg/cm² × 250 cycles |
|---|---|---|---|---|---|
| Ex. 1 | A | A | 4H | A | No change |
| Ex. 2 | A | B | 4H | A | No change |
| Ex. 3 | A | AA | 4H | A | No change |
| Ex. 4 | A | AA | 8H | A | No change |
| Ex. 5 | A | AA | 9H | A | No change |
| Comp. Ex. 1 | A | AA | 3H | C | Exfoliation |
| Comp. Ex. 2 | A | A | 2H | C | Exfoliation |
| Comp. Ex. 3 | A | A | 4H | C | Partial exfoliation |
| Comp. Ex. 4 | A | C | 4H | A | No change |
| Comp. Ex. 5 | A | AA | 3H | A | Exfoliation |
| Comp. Ex. 6 | A | AA | 3H | C | Exfoliation |
| Comp. Ex. 7 | A | AA | 3H | C | Exfoliation |

The data shown in Tables 1 and 2 indicate the following.
(1) The sample of Example 1 exhibited a pencil hardness of 4H while maintaining antifog performance, since the sample contained the polyvinyl acetal resin, colloidal silica, and TEOS. Also, the sample exhibited favorable abrasion resistance; i.e., a change in haze through the Taber abrasion test was suppressed to 4% or less. In addition, no change was observed in appearance after the wet cloth rubbing test and antifog property with respect to breath.
(2) The sample of Example 2 was produced in the same manner as in the case of Example 1, except that the amount of TEOS added was increased (i.e., the amount of SiO₂ was increased). Although the antifog property with respect to breath of the sample of Example 2 was slightly lowered as compared with the case of Example 1, the film hardness and abrasion resistance of the sample of Example 2 were comparable to those of the sample of Example 1.
(3) In the sample of Example 3, the composition of the coating liquid for forming a water-absorbing composite film was the same as in the case of the sample of Example 2, but a solution prepared by diluting a surfactant (trade name "Rapisol A-30," product of NOF Corporation, sodium 1,4-bis(2-ethylhexyl)sulfosuccinate) with water so as to attain a surfactant concentration of 10 mass% was applied to the surface of the thus-formed water-absorbing composite film. Since hydrophilicity was imparted to the surface of the water-absorbing composite film through absorption of the surfactant in the composite film, a water film was formed on the surface of the composite film after absorption of a saturated amount of water in the composite film, and thus no fogging occurred. Also, the film hardness and abrasion resistance of the sample of Example 3 were comparable to those of the sample of Example 2.
(4) In the sample of Example 4, the composition of the coating liquid for forming a water-absorbing composite film, and the method for application of a surfactant were the same as in the case of the sample of Example 3, but thermal drying (post-baking) was carried out at 120°C for 10 minutes after application of the surfactant to the surface of the composite film. Through this post-baking, the composite film exhibited a pencil hardness as high as 8H. Since the surfactant was dispersed in the water-absorbing composite film, a water film was formed on the surface of the composite film after absorption of a saturated amount of water in the composite film, and thus no fogging occurred. The sample of Example 4 passed the Taber abrasion test and the wet cloth rubbing test.
(5) In the sample of Example 5, a solution prepared by diluting a surfactant (trade name "Rapisol A-30," product of NOF Corporation, sodium 1,4-bis(2-ethylhexyl)sulfosuccinate) with water so as to attain a surfactant concentration of 10 mass% was applied to the surface of the composite film, and then thermal treatment was carried out at 120°C for 30 minutes. The composite film exhibited a pencil hardness as high as 9H through the 30-minute post-baking even after application of the surfactant. The sample of Example 5 passed the Taber abrasion test and the wet cloth rubbing test.
(6) The sample of Comparative Example 1 was produced in the same manner as in the case of Example 2, except that SNOWTEX OS was not added. Since the sample exhibited sufficient water absorbability, no fogging occurred through application of breath. However, the sample exhibited very high haze after the Taber abrasion test, and failed to attain sufficient abrasion resistance. In addition, exfoliation of the composite film occurred upon the wet cloth rubbing test.
(7) The sample of Comparative Example 2 was produced in the same manner as in the case of Comparative Example 1, except that the amount of TEOS added was increased. Since the amount of TEOS was increased, irregularities were formed on the surface of the composite film; i.e., so-called silking occurred, and the composite film failed to have a smooth surface. The sample exhibited a pencil hardness as low as 2H, and did not pass the Taber abrasion test and the wet cloth rubbing test.
(8) The sample of Comparative Example 3 was produced in the same manner as in the case of Example 2, except that the amount of colloidal silica added was changed to 1 mass%. The sample of Comparative Example 3 exhibited antifog property with respect to breath superior to that of the sample of Example 2, and exhibited a pencil hardness of 4H, which was equal to that of the sample of Example 2. However, the sample of Comparative Example 3 exhibited very high haze after the Taber abrasion test, and failed to exhibit sufficient abrasion resistance. In addition, partial exfoliation of the composite film occurred upon the wet cloth rubbing test.
(9) The sample of Comparative Example 4 was produced in the same manner as in the case of Example 2, except that the amount of colloidal silica added was changed to 3 mass%. The composite film of the sample exhibited a pencil hardness as high as 4H, and the sample passed the Taber abrasion test and the wet cloth rubbing test. However, fogging occurred through application of breath, and the degree of fogging was equal to that in the case of a common glass substrate.
(10) The sample of Comparative Example 5 was produced in the same manner as in the case of Example 2, except that TEOS was not added. The sample exhibited a pencil hardness as high as about 3H, and fogging did not occur even through application of a large amount of breath. Also, the sample exhibited sufficient abrasion resistance; i.e., a change in haze through the Taber abrasion test was suppressed to 4% or less. However, exfoliation of the composite film occurred upon the wet cloth rubbing test.
(11) The sample of Comparative Example 6 was produced from a polyvinyl acetal resin (S-LEC KX-1, product of Sekisui Chemical Co., Ltd.) and TEOS, serving as a silica sol raw material for matrix formation, without addition of colloidal silica and an acid, wherein the ratio by mass of the polyvinyl acetal resin to silica was adjusted to 99.5 : 0.5, and the solid content was adjusted to 3 mass%. The sample of Comparative Example 6 exhibited very high haze after the Taber abrasion test, and failed to attain sufficient abrasion resistance, although fogging did not occur even through application of a large amount of breath. In addition, exfoliation of the composite film occurred upon the wet cloth rubbing test.
(12) The sample of Comparative Example 7 was produced in the same manner as in the case of Comparative Example 6, except that the ratio by mass of the polyvinyl acetal resin to silica was adjusted to 99.0 : 5.0. Similar to the case of Comparative Example 6, the sample of Comparative Example 7 exhibited very high haze after the Taber abrasion test, and failed to attain sufficient abrasion resistance, although exhibiting sufficient antifog performance; i.e., fogging did not occur through application of breath. In addition, exfoliation of the composite film occurred upon the wet cloth rubbing test.

### Industrial Applicability

The antifog-film-coated article of the present invention includes a hard substrate; in particular, a transparent hard substrate, and a water-absorbing composite film provided on the hard substrate, the composite film having excellent antifog property and high pencil hardness. The antifog-film-coated article is suitable for use in various applications, including antifog mirrors for bathrooms and washrooms, antifog windowpanes and antifog mirrors for automobiles, and antifog windowpanes for buildings.

## Claims

1. An antifog-film-coated article comprising a hard substrate, and a water-absorbing composite film formed on the substrate, **characterized in that** the water-absorbing composite film contains a polyvinyl acetal resin; colloidal silica in an amount of 30 to 80 parts by mass on the basis of 100 parts by mass of the resin; and silica-equivalent particles derived from a hydrolysis product or partial hydrolysis product of a silicon alkoxide compound in a silica-equivalent amount of 5 to 55 parts by mass on the basis of 100 parts by mass of the resin, wherein the silica-equivalent amount is calculated from the amount of the silicon alkoxide employed, under the assumption that 1 mol of SiO₂ is formed from 1 mol of the silicon alkoxide,
wherein a surfactant is dispersed in the water-absorbing composite film and wherein the colloidal silica is SiO₂ fine particles having an average particle size of 5 to 50 nm.

2. The antifog-film-coated article according to claim 1, wherein the hard substrate is a mirror or a transparent hard substrate.

3. The antifog-film-coated article according to claim 1 or 2, wherein the transparent hard substrate is a glass substrate.

4. An antifog-film-coated article according to any of claims 1 to 3, wherein the water-absorbing composite film has a thickness of 2 to 10 µm.

5. A process for producing an antifog-film-coated article comprising a hard substrate and a water-absorbing composite film formed on the substrate according to claim 1, wherein the water-absorbing composite film is formed by applying a coating liquid for forming the water-absorbing composite film to the hard substrate and by subjecting the coated substrate to thermal treatment, in which the coating liquid contains an aqueous solvent, a polyvinyl acetal resin, colloidal silica and the hydrolysis product or partial hydrolysis product of a silicon alkoxide compound, wherein the process comprises the steps of applying an aqueous surfactant solution to the surface of the water-absorbing composite film formed through application of the coating liquid to the hard substrate and subsequent thermal treatment of the coated substrate, and subjecting the solution-coated film to thermal treatment, wherein the colloidal silica is SiO₂ fine particles having an average particle size of 5 to 50 nm, wherein a surfactant is dispersed in the water-absorbing composite film.

6. The process for producing an antifog-film-coated article according to any one of claim 5, wherein the silicon alkoxide compound is a tetraalkoxysilane.

7. A process for producing an antifog-film-coated article according to claim 5 comprising the steps of:
(a) forming a water-absorbing composite film by applying the coating liquid to the hard substrate followed by drying;
(b) subjecting the coated substrate obtained in step (a) to thermal treatment at a temperature of 50 to 130°C for 5 to 60 minutes;
(c) applying an aqueous solution containing a surfactant in an amount of 0.5 to 15 mass % to the surface of the water-absorbing composite film obtained in step (b); and
(d) subjecting the solution-coated film obtained in step (c) to thermal treatment at a temperature of 50 to 130°C for 5 to 60 minutes;
wherein the coating liquid used in step (a) contains an aqueous solvent, a polyvinyl acetal resin, colloidal silica and a hydrolysis product or partial hydrolysis product of a silicon alkoxide compound,
wherein the water-absorbing composite film contains the polyvinyl acetal resin; colloidal silica in an amount of 30 to 80 parts by mass on the basis of 100 parts by mass of the resin; and particles derived from the hydrolysis product or partial hydrolysis product of the silicon alkoxide compound in an silica-equivalent amount of 5 to 55 parts by mass on the basis of 100 parts by mass of the resin, wherein the silica-equivalent amount is calculated from the amount of the silicon alkoxide employed, under the assumption that 1 mol of SiO₂ is formed from 1 mol of the silicon alkoxide,
and wherein a surfactant is dispersed in the water-absorbing composite film.

## Patentansprüche

1. Mit Antibeschlagfilm beschichteter Artikel, umfassend ein hartes Substrat und einen wasserabsorbierenden Verbundfilm, der auf dem Substrat gebildet ist, **dadurch gekennzeichnet, dass** der wasserabsorbierende Verbundfilm ein Polyvinylacetalharz, kolloidales Siliciumdioxid in einer Menge von 30 bis 80 Masseteilen auf der Basis von 100 Masseteilen des Harzes und Siliciumdioxid äquivalente Teilchen, die von einem Hydrolyseprodukt oder Teilhydrolyseprodukt einer Siliciumalkoxidverbindung abgeleitet sind, in einer Siliciumdioxid äquivalenten Menge von 5 bis 55 Masseteilen auf der Basis von 100 Masseteilen des Harzes enthält, wobei die Siliciumdioxid äquivalente Menge aus der Menge an verwendetem Siliciumalkoxid unter der Annahme berechnet wird, dass 1 Mol SiO₂ aus 1 Mol des Siliciumalkoxids gebildet wird, wobei ein Tensid in dem wasserabsorbierenden Verbundfilm dispergiert ist und wobei das kolloidale Siliciumdioxid aus SiO₂-Feinteilchen besteht, die eine durchschnittliche Teilchengröße von 5 bis 50 nm aufweisen.

2. Mit Antibeschlagfilm beschichteter Artikel nach Anspruch 1, wobei das harte Substrat ein Spiegel oder ein transparentes hartes Substrat ist.

3. Mit Antibeschlagfilm beschichteter Artikel nach Anspruch 1 oder 2, wobei das transparente harte Substrat ein Glassubstrat ist.

4. Mit Antibeschlagfilm beschichteter Artikel nach einem der Ansprüche 1 bis 3, wobei der wasserabsorbierende Verbundfilm eine Dicke von 2 bis 10 µm aufweist.

5. Verfahren zur Herstellung eines mit Antibeschlagfilm beschichteten Artikels, umfassend ein hartes Substrat und einen wasserabsorbierenden Verbundfilm, der auf dem Substrat gebildet ist, nach Anspruch 1, wobei der wasserabsorbierende Verbundfilm durch Aufbringen einer Beschichtungsflüssigkeit zum Bilden des wasserabsorbierenden Verbundfilms auf das harte Substrat und Unterwerfen des beschichteten Substrats einer Wärmebehandlung gebildet wird, wobei die Beschichtungsflüssigkeit ein wässriges Lösungsmittel, ein Polyvinylacetalharz, kolloidales Siliciumdioxid und das Hydrolyseprodukt oder Teilhydrolyseprodukt einer Siliciumalkoxidverbindung enthält, wobei das Verfahren die Schritte umfasst des Aufbringens einer wässrigen Tensidlösung auf die Oberfläche des wasserabsorbierenden Verbundfilms, der durch Aufbringen der Beschichtungsflüssigkeit auf das harte Substrat und darauffolgende Wärmebehandlung des beschichteten Substrats und Unterwerfen des lösungsbeschichteten Films einer Wärmebehandlung gebildet wird, wobei das kolloidale Siliciumdioxid aus SiO₂-Feinteilchen besteht, die eine durchschnittliche Teilchengröße von 5 bis 50 nm aufweisen, wobei ein Tensid in dem wasserabsorbierenden Verbundfilm dispergiert ist.

6. Verfahren zur Herstellung eines mit Antibeschlagfilm beschichteten Artikels nach Anspruch 5, wobei die Siliciumalkoxidverbindung ein Tetraalkoxysilan ist.

7. Verfahren zur Herstellung eines mit Antibeschlagfilm beschichteten Artikels nach Anspruch 5, umfassend die Schritte des:
(a) Bildens eines wasserabsorbierenden Verbundfilms durch Aufbringen der Beschichtungsflüssigkeit auf das harte Substrat, gefolgt von Trocknen,
(b) Unterwerfens des beschichteten Substrats, das in Schritt (a) erhalten worden ist, einer Wärmebehandlung bei einer Temperatur von 50 bis 130 °C 5 bis 60 Minuten lang,
(c) Aufbringens einer wässrigen Lösung, die ein Tensid in einer Menge von 0,5 bis 15 Masse-% enthält, auf die Oberfläche des wasserabsorbierenden Verbundfilms, der in Schritt (b) erhalten worden ist, und
(d) Unterwerfens des lösungsbeschichteten Films, der in Schritt (c) erhalten worden ist, einer Wärmebehandlung bei einer Temperatur von 50 bis 130 °C 5 bis 60 Minuten lang,
wobei die Beschichtungsflüssigkeit, die in Schritt (a) verwendet wird, ein wässriges Lösungsmittel, ein Polyvinylacetalharz, kolloidales Siliciumdioxid und ein Hydrolyseprodukt oder ein Teilhydrolyseprodukt einer Siliciumalkoxidverbindung enthält,
wobei der wasserabsorbierende Verbundfilm das Polyvinylacetalharz, kolloidales Siliciumdioxid in einer Menge von 30 bis 80 Masseteilen auf der Basis von 100 Masseteilen des Harzes und Teilchen, die von dem Hydrolyseprodukt oder Teilhydrolyseprodukt der Siliciumalkoxidverbindung abgeleitet sind, in einer Siliciumdioxid äquivalenten Menge von 5 bis 55 Masseteilen auf der Basis von 100 Masseteilen des Harzes enthält, wobei die Siliciumdioxid äquivalente Menge aus der Menge an verwendetem Siliciumalkoxid unter der Annahme berechnet wird, dass 1 Mol SiO₂ aus 1 Mol des Siliciumalkoxids gebildet wird, wobei ein Tensid in dem wasserabsorbierenden Verbundfilm dispergiert ist.

## Revendications

1. Article revêtu de film anti-buée comprenant un substrat dur, et un film composite absorbant l'eau formé sur le substrat, **caractérisé en ce que** le film composite absorbant l'eau contient une résine de polyvinylacétal ; de la silice colloïdale dans une quantité de 30 à 80 parties en masse sur la base de 100 parties en masse de la résine ; et des particules d'équivalent de silice dérivées d'un produit d'hydrolyse ou d'un produit d'hydrolyse partielle d'un composé d'alcoxyde de silicium dans une quantité d'équivalent de silice de 5 à 55 parties en masse sur la base de 100 parties en masse de la résine, où la quantité d'équivalent de silice est calculée à partir de la quantité de l'alcoxyde de silicium utilisé, à supposer que 1 mole de SiO₂ serait formée à partir de 1 mole de l'alcoxyde de silicium, où un tensioactif est dispersé dans le film composite absorbant l'eau et où la silice colloïdale est de fines particules de SiO₂ ayant une taille moyenne de particule de 5 à 50 nm.

2. Article revêtu de film anti-buée selon la revendication 1, où le substrat dur est un miroir ou un substrat dur transparent.

3. Article revêtu de film anti-buée selon la revendication 1 ou 2, où le substrat dur transparent est un substrat de verre.

4. Article revêtu de film anti-buée selon l'une quelconque des revendications 1 à 3, où le film composite absorbant l'eau présente une épaisseur de 2 à 10 µm.

5. Procédé de production d'un article revêtu de film anti-buée comprenant un substrat dur et un film composite absorbant l'eau formé sur le substrat selon la revendication 1, où le film composite absorbant l'eau est formé par application d'un liquide de revêtement pour former le film composite absorbant l'eau au substrat dur et soumission du substrat revêtu à un traitement thermique, où le liquide de revêtement contient un solvant aqueux, une résine de polyvinylacétal, de la silice colloïdale et le produit d'hydrolyse ou le produit d'hydrolyse partielle d'un composé d'alcoxyde de silicium, où le procédé comprend les étapes d'application d'une solution aqueuse de tensioactif à la surface du film composite absorbant l'eau formé par application du liquide de revêtement sur le substrat dur et traitement thermique subséquent du substrat revêtu, et de soumission du film déposé en solution à un traitement thermique, où la silice colloïdale est de fines particules de SiO₂ ayant une taille moyenne de particule de 5 à 50 µm, où un tensioactif est dispersé dans le film composite absorbant l'eau.

6. Procédé de production d'un article revêtu de film anti-buée selon la revendication 5, où le composé d'alcoxyde de silicium est un tétraalcoxysilane.

7. Procédé de production d'un article revêtu de film anti-buée selon la revendication 5 comprenant les étapes de :
(a) formation d'un film composite absorbant l'eau par application du liquide de revêtement sur le substrat dur suivie par un séchage ;
(b) soumission du substrat revêtu obtenu dans l'étage (a) à un traitement thermique à une température de 50 à 130°C pendant de 5 à 60 minutes ;
(c) application d'une solution aqueuse contenant un tensioactif dans une quantité de 0,5 à 15 % en masse à la surface du film composite absorbant l'eau obtenu dans l'étape (b) ; et
(d) soumission du film déposé en solution obtenu dans l'étape (c) à un traitement thermique à une température de 50 à 130°C pendant de 5 à 60 minutes ;
où le liquide de revêtement utilisé dans l'étape (a) contient un solvant aqueux, une résine de polyvinylacétal, de la silice colloïdale et un produit d'hydrolyse ou produit d'hydrolyse partielle d'un composé d'alcoxyde de silicium,
où le film composite absorbant l'eau contient la résine de polyvinylacétal ; de la silice colloïdale dans une quantité de 30 à 80 parties en masse sur la base de 100 parties en masse de la résine ; et des particules dérivées du produit d'hydrolyse ou produit d'hydrolyse partielle du composé d'alcoxyde de silicium dans une quantité d'équivalent de silice de 5 à 55 parties en masse sur la base de 100 parties en masse de la résine, où la quantité d'équivalent de silice est calculée à partir de la quantité d'alcoxyde de silicium utilisée, à condition que 1 mole de SiO₂ est formée à partir de 1 mole de l'alcoxyde de silicium, et où un tensioactif est dispersé dans le film composite absorbant l'eau.
